# EUROPÄISCHE PATENTSCHRIFT

(11) **EP 0 760 324 B1**
(45) Veröffentlichungstag und Bekanntmachung des Hinweises auf die Patenterteilung: **31.03.1999**
(21) Anmeldenummer: 96113123.2
(22) Anmeldetag: 16.08.1996
(51) Int. Cl.: B62B 5/04

(54) **Bremsvorrichtung zum Feststellen kleinerer Fahrzeuge, wie z. B. Kinderwagen, Rollstühle, Kehrrichtwagen, Einkaufswagen, mit einem Pedal**
Braking device for locking small vehicles like perambulators, wheelchairs, cleaning trolleys, shopping carts, by using a pedal
Dispositif de freinage avec une pédale pour petits véhicules tels que voitures d'enfant, chaises roulantes, chariots de nettoyage ou d'achat

(30) Priorität: 25.08.1995 DE 29514241 U; 13.10.1995 DE 19538188
(43) Veröffentlichungstag der Anmeldung: 05.03.1997
(73) Patentinhaber: Tolges Kunststoffverarbeitung GmbH & Co. KG, 34404 Warburg/Westf. (DE)
(72) Erfinder: Tolges, Werner, 34404 Warburg/Westf. (DE)
(74) Vertreter: WALTHER, WALTHER & HINZ Patentanwälte

(56) Entgegenhaltungen:
- EP-A- 0 344 057
- EP-A- 0 422 376
- DE-U-29 511 501
- FR-A- 1 468 728
- US-A- 1 872 146
- US-A- 4 892 172

## Beschreibung

Rad mit einer Bremsvorrichtung zum Feststellen kleinerer Fahrzeuge, wie z.B. Kinderwagen, Rollstühle, Kehrrichtwagen, Einkaufswagen gegen Wegrollen mit einem Pedal.

Die Erfindung bezeiht sich auf ein Rad mit einer Bremsvorrichtung zum Feststellen kleiner Fahrzeuge, wie z. B. Kinderwagen, Rollstühle, Kehrrichtwagen, Einkaufswagen, gegen Wegrollen mit einem Pedal, wobei die Bremsvorrichtung mindestens ein, vorzugsweise zwei Bremselemente aufweist, die durch Steuerungselemente in formschlüssigen, aber lösbaren Eingriff mit dem Rad bringbar sind, wobei das Rad auf seiner der Bremsvorrichtung zugewandten Seite eine Verzahnung zum Eingriff mit dem Bremselement aufweist.

Die US-A 4,892,172 zeigt eine Vorrichtung zum Abbremsen bzw. Fixieren einer Welle in einem statorähnlichem Gehäuse. Der Aufbau dieser Vorrichtung ist sehr kompliziert, weshalb sich eine solche Vorrichtung nicht als Bremseinrichtung für das Rad eines Kleinfahrzeuges eignet.

Zum Feststellen von Kinderwagen ist nach dem Stand der Technik eine Feststellbremse bekannt, die durch Federdruck auf die Lauffläche des Rades wirkt. Insbesondere bei nachlassender Federkraft und aufgrund von durch abgefahrene Lauffläche vermindertem Durchmesser des Rades besteht die Gefahr, daß der Wagen, insbesondere bei starkem Gefälle, nicht mit Sicherheit gehalten wird.

Aus der US-A 1,872,146 ist eine Bremsvorrichtung für einen Kinderwagen bekannt, bei der mittels eines Hebelgestänges die Bremsvorrichtung betätigbar ist, wobei das Hebelgestänge Arme zeigt, die auf ihrer der Achse des Kinderwagens zugewandten Seite verzahnt ausgebildet sind, und korrespondierend hierzu in Eingriff mit einem verzahnten Rad auf der Achse des Kinderwagens bringbar sind. Hierbei besteht die Gefahr der Verschmutzung und demzufolge einer Funktionsuntüchtigkeit unter bestimmten Voraussetzungen.

Aus der EP-A 344 057 ist eine Bremse für das Rad eines Kinderwagens gemäß der eingangs genannten bekannt, die folgendermaßen funktioniert: Auf der Achse des Kinderwagens befindet sich das Rad. Das Rad weist eine Bremsscheibe auf, die mit einer Außenverzahnung versehen ist. Auf der Achse sitzt weiterhin das Pedal mit dem Betätigungsteil, das durch das Bremspedal mittels des Bremsorganes mit der Bremsscheibe in Eingriff bringbar ist. Das Bremsorgan ist hierbei kreissegmentartig ausgebildet und besitzt auf seinem der Bremsscheibe zugewandten Seite eine Verzahnung, die mit der Verzahnung der Bremsscheibe zusammenwirkt. Das Bremspedal selbst ist in einer zylindrischen Buchse auf einem Exzenter gelagert, wodurch bei Betätigung des Pedales das Bremsorgan in Eingriff mit der Bremsscheibe bringbar ist.

Nachteilig an dieser bekannten Vorrichtung ist, daß auch diese Vorrichtung Verschmutzungen ausgesetzt ist, wodurch die Gefahr besteht, daß bei starker Verschmutzung die Zähne der Bremseinrichtung nicht mehr miteinander in Eingriff geraten und somit keine Bremswirkung zu erzielen ist.

Der Erfindung liegt daher die Aufgabe zugrunde, eine Vorrichtung der eingangs genannten Art derart weiterzubilden, daß hiermit die Gefahr der Verschmutzung weitestgehend vermieden ist.

Die Aufgabe wird erfindungsgemäß dadurch gelöst, daß die Verzahnung auf dem Umfang einer Radnabe eines Rades angeordnet ist, wobei die Bremsvorrichtung ein Gehäuse mit einer korrespondierend zu dem Durchmesser der Verzahnung ausgebildeten, topfartigen Vertiefung aufweist, so daß die Verzahnung von der topfartigen Vertiefung aufnehmbar ist.

Mit dieser Bremsvorrichtung wird die Möglichkeit eröffnet, ein Kleinfahrzeug, also beispielsweise einen Kinderwagen, bei starker Verschmutzung und auch bei starkem Gefälle gegen Wegrollen zu sichern.

Im einzelnen ist vorgesehen, daß die Bremsvorrichtung auf der Achse angeordnet ist, und daß das Rad auf seiner der Bremsvorrichtung zugewandten Seite eine Verzahnung zum Eingriff mit dem Bremselement aufweist.

Weiterhin sind im Randbereich der topfartigen Vertiefung die Bremselemente in der Bremsvorrichtung angeordnet, so daß die Bremselemente radial in Eingriff mit der auf der Nabe befindlichen Verzahnung bringbar sind.

Die Steuerungseinrichtung umfaßt eine mit der Achse des Wagens verbindbare, in dem Gehäuse gelagerte Steuerscheibe, wobei bei Verdrehung des Gehäuses relativ zu der Steuerscheibe die Bremselemente in oder außer Eingriff mit der Verzahnung bringbar sind. Die Verdrehung des Gehäuses erfolgt hierbei durch das am Gehäuse angeordnete Pedal. Im einzelnen ist vorgesehen, daß die Bremselemente jeweils in einer am Gehäuseboden angeordneten Führungsnut geführt sind, wobei die Führungsnut vom Gehäusemittelpunkt, insbesondere tangential wegführend verläuft, so daß im Bereich des größten radialen Abstandes der Nut vom Achsmittelpunkt des Gehäuses, das beispielsweise als Zahn ausgebildete Bremselement, außer Eingriff mit der Verzahnung steht. Im Gegensatz dazu befindet sich das als Zahn ausgebildete Bremselement in Eingriff mit der auf der Radnabe angeordneten Verzahnung, wenn das jeweilige Bremselement bzw. der Zahn sich am anderen Ende der Führungsnut befindet, die den geringsten radialen Abstand zum Achsmittelpunkt des Gehäuses aufweist. Zur Steuerung eines jeden Bremselementes weist jedes Bremselement eine Steuerkante auf, wobei die Steuerscheibe auf ihrer den Bremselementen zugewandten einen Seite zwei Steuerglieder aufweist, die an den Steuerkanten anliegen. Bei Verdrehung des Gehäuses relativ zur Steuerscheibe wird aufgrund der Zwangsführung der Bremselemente in der jeweiligen Führungsnut des Gehäuses die beiden Bremselemente gleichzeitig radial vom Achsmittelpunkt des Gehäuses weggeführt, mithin der Zahn außer Eingriff mit der Verzahnung gebracht bzw. bei entgegengesetzter Schwenkbewegung des Gehäuses werden die Zähne des Bremselementes in Eingriff mit der Verzahnung gebracht.

Nach einem besonders vorteilhaften Merkmal der Erfindung weist die Steuerscheibe auf ihrer den Bremselementen abgewandten anderen Seite eine Steuerkurve auf, wobei die Steuerkurve derart ausgebildet ist, daß in einer ersten Stellung die Bremselemente in Eingriff und in einer zweiten Stellung außer Eingriff mit dem Rad bzw. der Verzahnung auf der Radnabe stehen. Weiterhin ist ein Steuerkurvenführungselement vorgesehen, daß in Eingriff mit der Steuerkurve bringbar ist, und das radial verschieblich von einem mit dem Gehäuse verbindbaren Deckel aufnehmbar ist.

Nach einem vorteilhaften weiteren Merkmal der Erfindung ist die Steuerkurve geschlossen ausgebildet. Hierdurch wird erreicht, daß bei Betätigung des Pedales die Bremselemente aus der Offenstellung in Eingriff mit der Verzahnung bringbar sind, und daß bei einer weiteren Betätigung des Bremspedales in die gleiche Richtung das Steuerkurvenführungselement in die andere Stellung gelangt, in der sich die Bremselemente wieder außer Eingriff mit der Verzahnung befinden. Zwischen der Offenstellung und der Stellung der Bremselemente in Eingriff mit der Verzahnung existiert eine Dritte Stellung (Schaltstellung) von der aus entsprechend der Ausgangsstellung die Bremselemente in oder außer Eingriff mit der Verzahnung gelangen.

Im einzelnen ist weiterhin vorgesehen, daß das Steuerkurvenführungselement U-förmig ausgebildet ist, wobei der Steg einen Kurvenstift zur Führung durch die Steuerkurve aufweist, wobei die Schenkel in im Deckel angeordnete Nuten radial verschieblich geführt sind.

Vorteilhaft weist die Steuerscheibe auf ihrer anderen Seite einen sich parallel zur Gehäuseachse erstreckenden Stift auf, wobei der Deckel zur Führung des Stiftes eine kreisbogenartige Führungsnut aufweist. Die Länge der sich tangential auf bzw. in dem Deckel erstreckenden Führungsnut entspricht in etwa der maxialen tangentialen Erstreckung der Steuerkurve. Diese Führungsnut hat eine Begrenzungsfunktion der Art, daß das Pedal nur um einen Weg verschwenkt werden kann, der der tangentialen Erstreckung der Führungsnut entspricht.

Zum Verschließen der im Deckel vorhandenen Öffnungen, insbesondere der Führungsnut zur Begrenzung der Schwenkbewegung des Gehäuses relativ zur Steuerscheibe, ist ein weiterer Abschlußdeckel vorgesehen.

Damit das Pedal zum Feststellen und Lösen der Bremsvorrichtung nur in einer Richtung durch den Fuß betätigt werden muß, ist vorgesehen, das Pedal entgegen einer Federkraft relativ zur Radachse zu verschwenken. Hierbei wird die Feder gespannt, so daß bei weiterer Verschwenkung des Pedals, nach Erreichen der Schaltstellung, das Pedal in eine Endstellung zurückgelangt. Die Endstellung kann hierbei entweder die Stellung sein, bei der die Bremselemente in Eingriff mit der Verzahnung, oder außer Eingriff mit der Verzahnung stehen, je nachdem, ob in der Ausgangsstellung, bei der das Pedal betätigt wurde die Bremselemente sich in oder außer Eingriff mit der Verzahnung befanden.

Die jeweilige Endstellung ist immer unterschiedlich zu der Ausgangsstellung. D.h., die Bremselemente gelangen von der Stellung "außer Eingriff" über die Schaltstellung in die Stellung "in Eingriff" oder umgekehrt.

Im einzelnen ist die Feder derart im Gehäuse angeordnet, daß das Gehäuse entgegen der Kraft der Feder relativ zur Steuerscheibe drehbar gelagert ist. Die Befestigung des einen Endes der Feder, beispielsweise einer Spiralfeder, erfolgt durch den Stift der Steuerscheibe; der Deckel weist weitere Mittel zur Befestigung des anderen Endes der Feder auf.

Anhand der Zeichnungen wird die Erfindung nachstehend beispielhaft näher erläutert.
- Fig. 1: zeigt die Zusammenbauzeichnung der erfindungsgemäßen Bremsvorrichtung;
- Fig. 2: zeigt eine Ansicht auf das Gehäuse mit Pedal, wobei die Führungsnuten für die Bremselemente sichtbar sind;
- Fig. 3: zeigt eine stirnseitige Ansicht gemäß Fig.2;
- Fig. 4: zeigt eine Ansicht von der anderen offenen Seite gemäß Figur 2;
- Fig. 5: zeigt die Steuerscheibe mit Steuerkurve und Steuergliedern;
- Fig. 6: zeigt einen Schnitt gemäß der Linie VI-VI aus Figur 5;

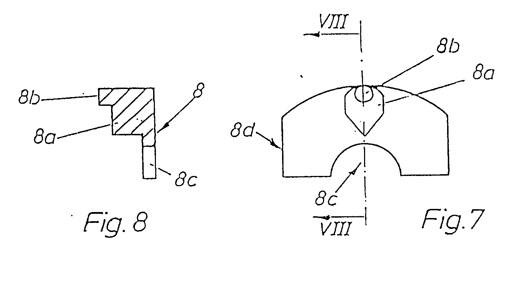

- Fig. 7: zeigt das Bremselement in einer Draufsicht, wobei der Zahn zum Eingriff mit der Verzahnung der Radnabe sichtbar ist;
- Fig. 8: zeigt einen Schnitt gemäß der Linie VIII-VIII aus Figur 7;

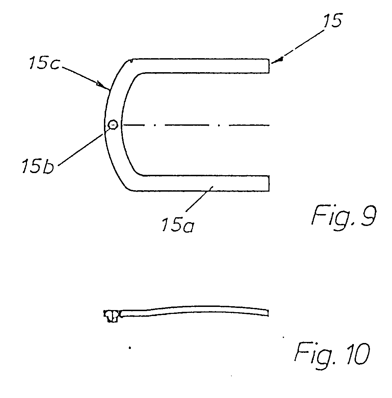

- Fig. 9: zeigt das U-förmig ausgebildete Steuerkurvenführungselement;
- Fig. 10: zeigt eine Seitenansicht des Steuerkurvenführungselementes gemäß Figur 9;
- Fig. 11: zeigt den Deckel in einer Ansicht von oben, wobei die Nuten zur Führung des Steuerkurvenführungselementes sichtbar sind;
- Fig. 12: zeigt einen Schnitt gemäß der Linie XII-XII aus Figur 11;
- Fig. 13: zeigt den Deckel in einer anderen Ansicht von oben;
- Fig. 14: zeigt den Abschlußdeckel in einer Ansicht von oben;
- Fig. 15: zeigt einen Schnitt gemäß der Linie XV-XV aus Figur 14;
- Fig. 16: zeigt schematisch die Bremsvorrichtung im in der Verzahnung der Nabe eingerücktem Zustand der Zähne der Bremselemente;
- Fig. 17: zeigt die Stellung des Steuerkurvenführungselementes in der Stellung gemäß Fig.16, wobei die Steuerkurve sichtbar ist;
- Fig. 18 und Fig.19: zeigen die Stellung der Zähne der Bremselemente während des Schaltvorganges;
- Fig. 20 und Fig.21: zeigen die Stellung der Zähne der Bremselemente im Zustand, bei dem die Zähne außer Eingriff mit der Verzahnung der Radnabe sind.
- Fig. 22: zeigt die Bremsvorrichtung im zusammengebauten Zustand, wobei in dieser Darstellung die Spiralfeder sichbar ist.

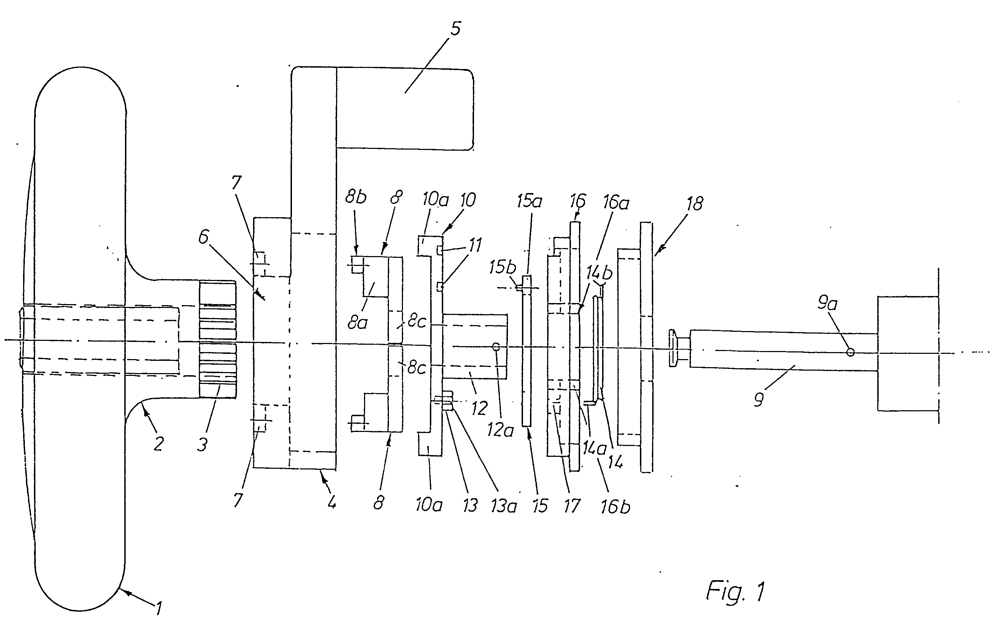

Bei der in Figur 1 dargestellten Zusammenbauzeichnung ist das Rad insgesamt mit 1 bezeichnet; das Rad 1 weist die Radnabe 2 auf, die auf ihrem Umfang die Verzahnung 3 besitzt. Das insgesamt mit 4 bezeichnete Gehäuse besitzt das Pedal 5 und die topfartige Vertiefung 6 zur Aufnahme der auf der Radnabe 2 angeordneten Verzahnung 3. Darüberhinaus sind im Bereich der topfartigen Vertiefung 6 die Führungsnuten 7 zur Aufnahme der insgesamt mit 8 bezeichneten Bremselemente erkennbar. Die Bremselemente 8 besitzen jeweils einen Zahn 8a und auf dem Zahn einen Führungsstift 8b, der durch die im Gehäuse angeordnete Führungsnut 7 geführt wird. Jedes scheibenförmig ausgebildete Bremselement 8 weist mittig eine halbkreisförmige Aussparung 8c zum Durchlaß der Achse 9 des Fahrzeugs, z.B. eines Kinderwagens auf. Die Achse 9 ragt im übrigen bis in die Nabe 2 des Rades 1 hinein. Die Bremselemente 8 stehen in Wirkverbindung mit der insgesamt mit 10 bezeichneten Steuerscheibe. Die Steuerscheibe 10 weist auf ihrer den Bremselementen 8 zugewandten Seite zwei Steuerglieder 10a auf, die mit den Bremselementen 8 derart zusammenwirken, daß die Bremselemente 8 bei Verdrehen der Steuerscheibe in ihrer jeweiligen Führungsnut 7 in dem Gehäuse 4 aufeinander zu- bzw. voneinander bewegt werden. Auf ihrer den Bremselementen 8 abgewandten Seite besitzt die Steuerscheibe 10 die insgesamt mit 11 bezeichnete Steuerkurve. Mittig weist die Steuerscheibe 10 die Hülse 12 mit der Bohrung 12a zur Aufnahme eines nicht dargestellten Splintes zur Verbindung mit der Bohrung 9a der Achse 9 auf. Die Steuerschelbe besitzt darüberhinaus auf der den Bremselementen 8 abgewandten Seite einen sich parallel zur Gehäuseachse erstreckenden Stift 13 mit Bohrungen 13a zur Aufnahme des einen Endes 14a der Spiralfeder 14. Von der Steuerkurve 11 wird das Steuerkurvenführungselement 15 geführt . Diese Steuerkurvenführungselement, das U-förmig ausgebildet ist, besitzt auf seinem Steg 15a einen Stift 15b, der von der Steuerkurve 11 aufgenommen wird. Gehalten wird das Steuerkuvenführungselement 15 durch den insgesamt mit 16 bezeichneten Deckel. Der Deckel 16 besitzt parallel laufende Nuten zur radial verschieblichen Führung des Steuerkurvenführungselementes 15. Darüberhinaus zeigt der Deckel 16 eine Bohrung 16a zur Durchführung der Hülse 12 der Steuerscheibe 10. Um zu verhindern, daß die Spiralfeder bei Beanspruchung verrutscht, ist ein Bund 16b vorgesehen, der sich um die Öffnung 16a im Deckel 16 erstreckt. An diesem kreisrunden Bund 16b liegt die Spiralfeder 14 an. Der Deckel weist darüber hinaus den Führungsschlitz 17 auf, der sich tangential kreisbogenartig um die Bohrung 16a bzw. den Bund 16b erstreckt, wobei die Länge des sich tangential erstreckenden Führungsschlitzes In etwa der maximalen Erstreckung der Steuerkurve 11 der Steuerscheibe 10 entspricht. Durch diesen Führunsschlitz 17 ragt das eine Ende 14a der Spiralfeder 14 bis in die Öffnung 13a des Stiftes 13 hinein. Das andere Ende 14b der Feder 14 wird von dem Abschlußdeckel 18 aufgenommen.

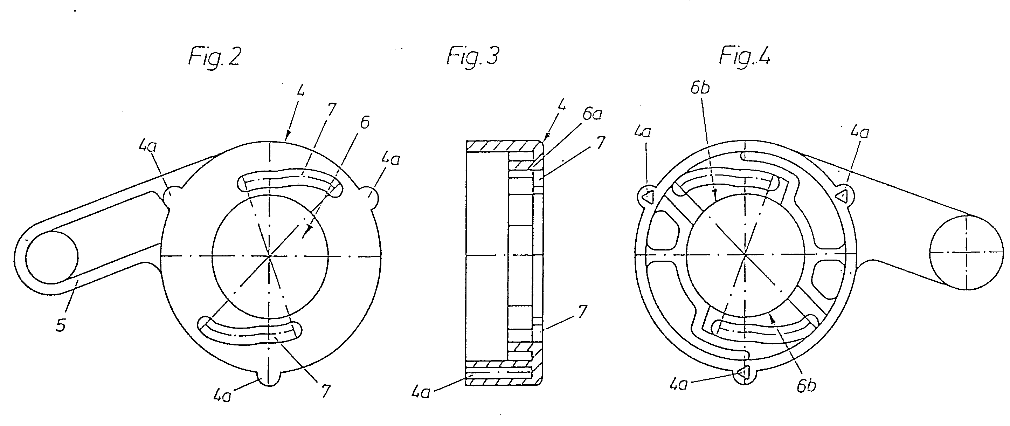

Die Figuren 2 bis 4 zeigen das Gehäuse in einer anderen Ansicht; so zeigt Figur 2 eine Ansicht von außen auf das Gehäuse, wobei die Führungsnuten 7 sichtbar sind. Die Führungsnuten 7 verlaufen vom Gehäusemittelpunkt bzw. von der topfartigen Vertiefung 6 aus tangential nach außen. Das Gehäuse 4 besitzt darüberhinaus drei Schraubbohrungen 4a zur Verbindung mit dem Deckel 16 und dem Abschlußdeckel 18. Im Bereich der topfartigen Vertiefung 6 sind Stege 6a vorgesehen (Fig.3), auf denen die scheibenartigen Bremselemente 8 verschieblich geführt sind. Die Bremselemente 8 werden durch jeweils einen Führungsstift 8b in der jeweiligen Führungsnut geführt. Im Bereich der Führungsnuten 7 besitzt die topfartige Vertiefung 6 im Bereich des Randes Öffnungen 6b, um den Bremselementen 8 bzw. den an den Bremselementen 8 angeordneten Zähnen 8a den Eingriff mit der Verzahnung 3 der Radnabe 2 zu ermöglichen.

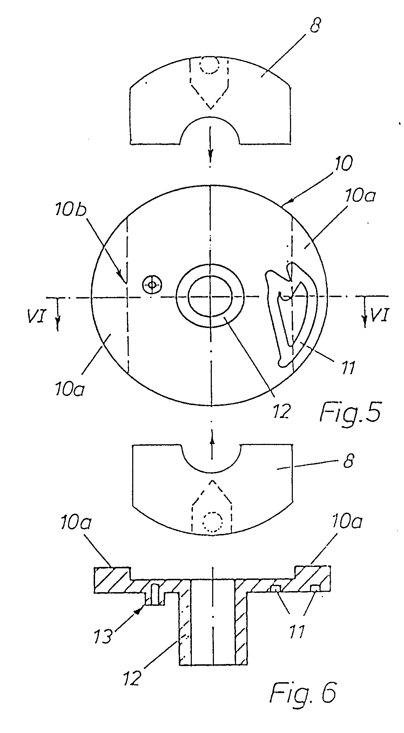

Die Figuren 5 und 6 zeigen die Steuerscheibe zum Steuern der Bewegung der Bremselemente 8 in den Führungsnuten 7. Auf der den Bremselementen 8 zugewandten Seite besitzt die Steuerscheibe 10 die Steuerglieder 10a, die etwa kreisbogensegmentartig ausgebildet sind. Die Steuerglieder 10a weisen eine Kante 10b auf, die als Anlagefläche für die Steuerkante 8d der Bremselemente 8 dient. Die Anordnung der Steuerglieder 10a auf der Steuerscheibe ist somit derart, daß in der Fläche zwischen den Steuergliedern eine Aussparung gebildet wird, die so groß ist, daß die Steuerglieder durch die parallelen Kanten 10b der Steuerglieder parallel verschieblich geführt sind. Zur Verdeutlichung zeigt die Figur 5, in welcher Weise die Bremselemente 8 von der Steuerscheibe 10 aufgenommen werden.

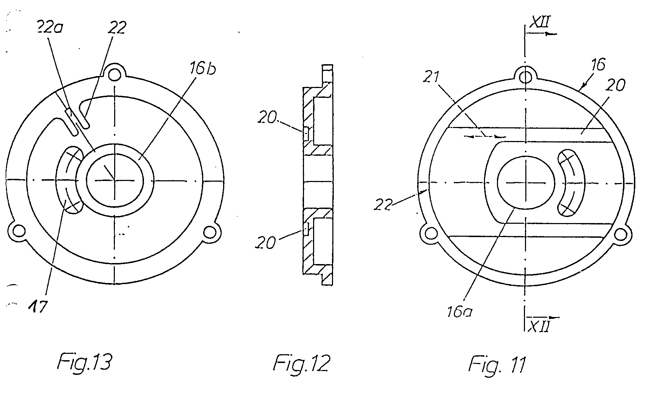

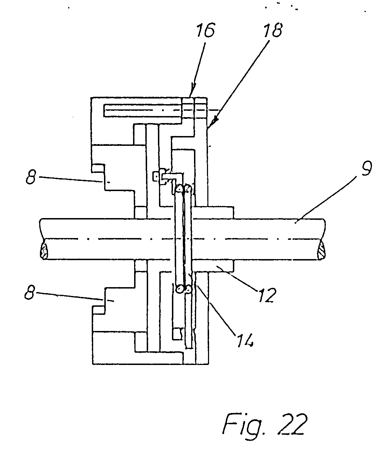

Die Steuerscheibe 10 zeigt auf ihrer den Bremselementen 8 abgewandten Seite die geschlossene Steuerkurve 11. In die Steuerkurve 11 ragt der Kurvenstift 15b hinein. Dieser Kurvenstift 15b des Steuerkurvenführungselementes 15 ist mittig am Steg 15c des U-förmig ausgebildeten Steuerkurvenführungselementes 15 angeordnet. Das Steuerkurvenführungselement 15 ist im Bereich der Schenkel 15a mit einer leichten Wölbung versehen, die bewirkt, daß das Steuerkurvenführungselement 15 selbsthemmend von den im Deckel 16 angeordneten Nuten 20 aufgenommen wird, so daß die Bremsvorrichtung lagenunabhängig eingebaut werden kann. Entlang der Nuten 20 in Richtung des Pfeiles 21 wird das Steuerkurvenführungselement 15 bei Drehung der Steuerscheibe 10 verschoben. Auch der Deckel 16 weist eine Bohrung 16a zum Durchlaß der Achse 9 auf, wobei auf der dem Abschlußdeckel 18 zugewandten Seite der Deckel 16 den kreisrunden Bund 16b besitzt, an dem sich die Spiralfeder 14 abstützt (Fig. 22). Aus den Figuren 11 bis 13 ist ebenfalls der Führungsschlitz 17 erkennbar, der der Aufnahme des Stiftes 13 der Steuerscheibe 10 dient. Darüberhinaus zeigt der Deckel die Stegklemme 22 mit dem Schlitz 22a zur Aufnahme des anderen Endes 14b oder Feder 14.

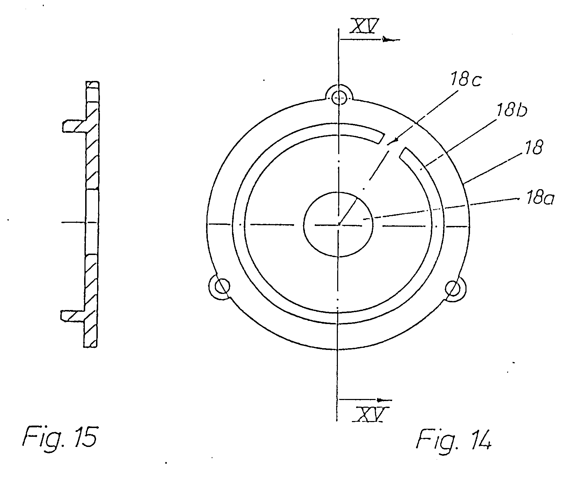

Die Figuren 14 und 15 zeigen, daß der Abschlußdeckel 18 ebenfalls eine Bohrung 18a zum Durchlaß der Achse 9 aufweist. Im Randbereich ist der Deckel 18 mit einem umlaufenden Steg 18b versehen, der eine Öffnung 18c zur Aufnahme der Stegklemme 22 mit dem Schlitz 22a für das andere Ende 14b der Feder 14 besitzt.

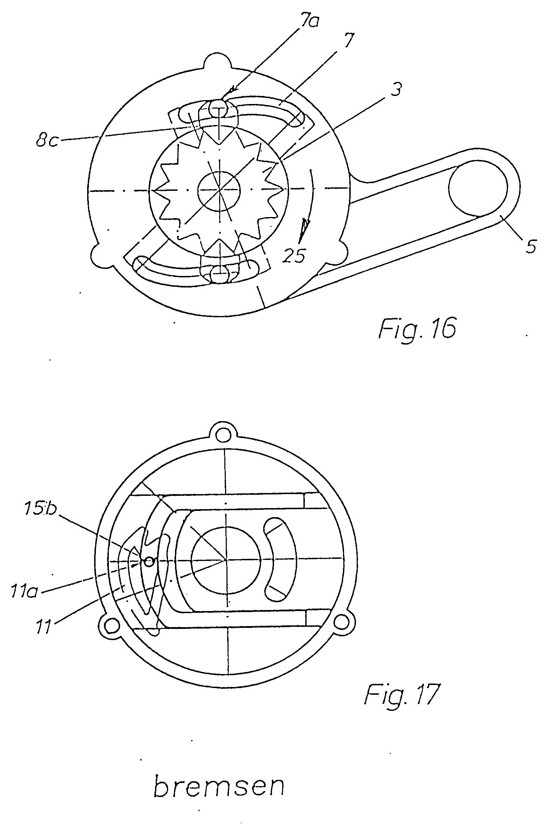

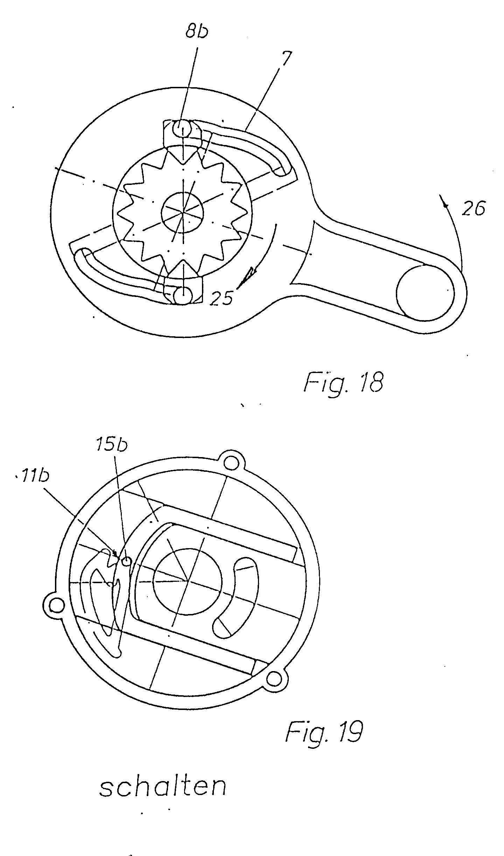

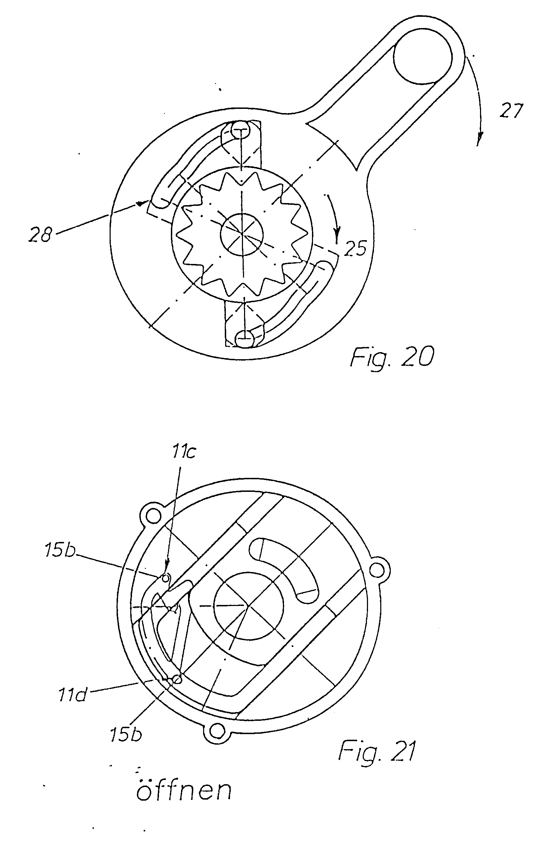

Die Funktionsweise der Bremsvorrichtung ergibt sich aus den Figuren 16 bis 21; bei der Stellung der Zähne 8a gemäß den Figuren 16 und 17 ist das Rad 1 blockiert, da die Zähne sich im Eingriff mit der Verzahnung 3 der Radnabe 2 befinden. In diesem Fall befindet sich der Führungsstift 8b im Bereich einer Delle 7a der Führungsnut 7. Diese Delle 7a der Führungsnut 7 bewirkt, daß die Zähne 8a nicht unbeabsichtigt außer Eingriff mit der Verzahnung 3 gelangen. In diesem Fall befindet sich der Kurvenstift 15b in einer Einbuchtung 11a der Steuerkurve 11. Wird nunmehr das Pedal 5 in Richtung des Pfeiles 25 bewegt, dann gelangt zunächst der Führungsstift 8b des Bremselementes 8 in die eine Endstellung an der Führungsnut 7. Der Kurvenstift 15b befindet sich in der einen Endstellung (bei 11b siehe Fig.19). Beim Verschwenken des Pedals 5 wird in Richtung des Pfeils 25 immer die Spiralfeder 14 in der Art vorgespannt, daß bei Loslassen des Pedales das Pedal nach oben entgegen der Richtung des Pfeiles 25 verschwenkt, hierbei geht der Kurvenstift 15b aus der Stellung 11b gemäß der Figur 19 in die Stellung 11d gemäß Figur 21 über, wobei dann die Zähne 8a außer Eingriff mit der Verzahnung 3 gelangen. Wird nunmehr das Pedal 5 aus der Stellung gemäß Fig.20 bzw. Fig.21 in Richtung des Pfeiles 25 verschwenkt, gelangt der Kurvenstift 15b in den Bereich 11c der Kurve 11 - der Führungsstift 8b befindet sich dann wieder am anderen Ende der Führungsnut 7, angedeutet mit dem Pfeil 28. Wird dann das Pedal losgelassen, wandert der Kurvenstift in die Stellung gemäß Figur 17, d.h., daß der Zahn 8a in Eingriff mit der Verzahnung steht.

## Patentansprüche

1. Rad (1) mit einer Bremsvorrichtung (4 bis 18) zum Feststellen kleiner Fahrzeuge, wie z. B. Kinderwagen, Rollstühle, Kehrrichtwagen, Einkaufswagen, gegen Wegrollen mit einem Pedal (5), wobei die Bremsvorrichtung (4 bis 18) mindestens ein, vorzugsweise zwei Bremselemente (8) aufweist, die durch Steuerungselemente (10 bis 16) in formschlüssigen, aber lösbaren Eingriff mit dem Rad (1) bringbar sind, wobei das Rad (1) auf seiner der Bremsvorrichtung (4 bis 18) zugewandten Seite eine Verzahnung (3) zum Eingriff mit dem Bremselement (8) aufweist,
**dadurch gekennzeichnet,** daß die Verzahnung (3) auf dem Umfang einer Radnabe (2) des Rades (1) angeordnet ist, wobei die Bremsvorrichtung (4 bis 18) ein Gehäuse (4) mit einer korrespondierend zu dem Durchmesser der Verzahnung ausgebildeten, topfartigen Vertiefung (6) aufweist, so daß die Verzahnung (3) von der topfartigen Vertiefung (6) aufnehmbar ist.

2. Rad nach Anspruch 1,
**dadurch gekennzeichnet,** daß die Bremsvorrichtung (4 bis 18) auf der Radachse (9) angeordnet ist.

3. Rad nach Anspruch 1,
**dadurch gekennzeichnet,** daß im Wandbereich der topfartigen Vertiefung (6) die Bremselemente (8) der Bremsvorrichtung angeordnet sind, so daß die Bremselemente (8) radial in Eingriff mit der Verzahnung (3) der Habe (2) bringbar sind.

4. Rad nach Anspruch 1,
**dadurch gekennzeichnet,** daß die Steuerungselemente (10 bis 16) eine mit der Achse (9) verbindbare in dem Gehäuse (4) gelagerte Steuerscheibe (10) umfaßt, wobei bei Verdrehung des Gehäuses (4) relativ zu der Steuerscheibe (10) die Bremselemente (8) in oder außer Eingriff mit der Verzahnung (3) bringbar sind.

5. Rad nach Anspruch 4,
**dadurch gekennzeichnet,** daß jedes Bremselement (8) in einer im Gehäuseboden angeordneten Führungsnut (7) geführt ist, wobei die Führungsnut (7) vom Gehäusemittelpunkt wegführend verläuft.

6. Rad nach Anspruch 4,
**dadurch gekennzeichnet,** daß das Bremselement (8) einen Zahn (8a) zum Eingriff mit der Verzahnung (3) der Radnabe (2) aufweist.

7. Rad nach Anspruch 4,
**dadurch gekennzeichnet,** daß das Bremselement (8) eine Steuerkante und die Steuerscheibe (10) auf ihrer dem Bremselement (8) zugewandten einen Seite zwei Steuerglieder (10a) aufweist, wobei das Bremselement an den Steuerkanten (10b) der Steuerglieder (10a) anliegt.

8. Rad nach Anspruch 4,
**dadurch gekennzeichnet,** daß die Steuerscheibe (10) auf ihrer dem Bremselement (8) abgewandten anderen Seite eine Steuerkurve (11) aufweist, wobei die Steuerkurve (11) derart ausgebildet ist, daß in einer ersten Stellung die Bremselemente (8) in Eingriff und in einer zweiten Stellung außer Eingriff mit der Verzahnung (3) der Radnabe (2) bringbar sind.

9. Rad nach Anspruch 8,
**dadurch gekennzeichnet,** daß die Steuerkurve (11) geschlossen ist.

10. Rad nach Anspruch 9,
**dadurch gekennzeichnet,** daß ein Steuerkurvenführungselement (15) vorgesehen ist, das in Eingriff mit der Steuerkurve (11) bringbar ist, und das radial verschieblich von einem mit dem Gehäuse (4) verbindbaren Deckel (16) aufnehmbar ist.

11. Rad nach Anspruch 10,
**dadurch gekennzeichnet,** daß die Steuerscheibe (10) auf ihrer anderen Seite einen sich parallel zur Gehäuseachse erstreckenden Stift (13) aufweist, wobei der Deckel (16) zur Führung des Stiftes (13) einen kreisbogenartigen Führungsschlitz (17) besitzt.

12. Rad nach Anspruch 11,
**dadurch gekennzeichnet,** daß die Länge des sich tangential auf den Deckel (16) erstreckenden Führungsschlitzes (17) in etwa der maximalen Erstreckung der Steuerkurve (11) entspricht.

13. Rad nach Anspruch 10,
**dadurch gekennzeichnet,** daß das Steuerkurvenführungslement (15) U-förmig ausgebildet ist, wobei ein Steg (15c) einen Kurvenstift (15b) zur Führung durch die Steuerkurve (11) aufweist, und wobei Schenkel (15a) in im Deckel (16) angeordneten Nuten (20) radial verschieblich geführt sind.

14. Rad nach Anspruch 10,
**dadurch gekennzeichnet,** daß zum Verschließen im Deckel (16) vorhandener Öffnungen ein zweiter Abschlußdeckel (18) vorgesehen ist.

15. Rad nach Anspruch 1,
**dadurch gekennzeichnet,** daß das Pedal (5) am Gehäuse (4) befestigt ist.

16. Rad nach Anspruch 2,
**dadurch gekennzeichnet,** daß das Pedal (5) entgegen einer Federkraft relativ zur Radachse (9) verschwenkbar ist.

17. Rad nach Anspruch 4,
**dadurch gekennzeichnet,** daß das Gehäuse (4) entgegen der Kraft einer Feder (14) relativ zur Steuerscheibe (10) drehbar gelagert ist.

18. Rad nach Anspruch 11,
**dadurch gekennzeichnet,** daß der Stift (13) der Steuerscheibe (10) Mittel (13a) zur Befestigung des einen Endes (14a) einer Feder (14) aufweist, und daß der Deckel (16) weitere Mittel (22) zu Befestigung des anderen Endes (14b) der Feder (14) aufweist.

## Claims

1. Wheel (1) with brake device (4 to 18) for immobilizing small vehicles, as for example prams, wheel-chairs, refuse vehicles, shopping trolleys, with a pedal (5) so that they cannot roll away, whereas said brake device (4 to 18) has at least one, preferably two brake elements (8), which may be brought into positive but removable interaction with the wheel (1) by control elements (10 to 16), whereas the wheel (1) is fitted with a gear (3) intended to interact with the brake element (8) on the side facing the brake device (4 to 18),
**characterized in that** the gear (3) is accomodated on the circumference of the hub (2) of the wheel (1), whereas the brake device (4 to 18) has a housing (4) with a pot-like deepening (6) corresponding to the diameter of the gear, so that the gear (3) may be received by the pot-like deepening (6).

2. Wheel according to claim 1,
**characterized in that** the brake device (4 to 18) is accomodated on the axis (9).

3. Wheel according to claim 1,
**characterized in that** the brake elements (8) of the brake device are arranged in the wall area of the pot-like deepening (6), so that the brake elements (8) may be radially engaged with the gear (3) of hub (2).

4. Wheel according to claim 1,
**characterized in that** the control elements (10 to 16) are comprising a disk cam (10) connectable with the axis (9) and borne in the housing (4), whereas the brake elements (8) may be brought into or released from interaction with gear (3) by turning the housing (4) with respect to the disk cam (10).

5. Wheel according to claim 4,
**characterized in that** each brake element (8) is guided in a guiding groove (7) arranged in the bottom of the housing, whereas the guiding groove (7) is leading away from the centre of the housing.

6. Wheel according to claim 4,
**characterized in that** the brake element (8) has a tooth (8a) for the interaction of said brake element with the gear (3) of hub (2).

7. Wheel according to claim 4,
**characterized in that** the brake element (8) has a control edge and that the disk cam (10) has two control members (10a) on its side facing the brake element (8), whereas the brake element is adjacent to the control edges (10b) of control member (10a).

8. Wheel according to claim 4,
**characterized in that** the disk cam (10) has a control cam (11) on the side which is turned away from the brake element (8), whereas the control cam (11) is designed in such a way that, in a first position, the brake elements (8) may be brought into interaction with the gear (3) of hub (2) and that, in a second position, they may be released from interaction with gear (3) of hub (2).

9. Wheel according to claim 8,
**characterized in that** the control cam (11) is closed.

10. Wheel according to claim 9,
**characterized in that** a guide element for the control cam (15) is provided that may be brought into interaction with the control cam (11) and that may be received in a radially slidable way by a cover (16) which is connectable to the housing (4).

11. Wheel according to claim 10,
**characterized in that** the disk cam (10) has, on its other side, a pin (13) parallel to the axis of the housing, whereas the cover (16) is provided with a guide slot (17) having the shape of an arc of a circle for guiding the pie (13).

12. Wheel according to claim 11,
**characterized in that** the length of the guide slot (17) extending tangentially on the cover (16) is corresponding approximately to the maximum extension of the control cam (11).

13. Wheel according to claim 10,
**characterized in that** the guide element for the control curve (15) is U-shaped, whereas a web (15c) has a curve pin (15b) for guiding through the control cam (11), and whereas legs (15a) are guided so as to be radially slidable in the grooves (20) arranged in the cover (16).

14. Wheel according to claim 10,
**characterized in that** a second cover plate (18) is provided in order to close apertures arranged in the cover (16).

15. Wheel according to claim 1,
**characterized in that** the pedal (5) is fastened on the housing (4).

16. Wheel according to claim 2,
**characterized in that** the pedal (5) may be pivoted against a spring's force relative to the axle (9) of the wheel.

17. Wheel according to claim 4,
**characterized in that** the housing (4) is turnably borne against the spring's (14) force relative to the disk cam (10).

18. Wheel according to claim 11,
**characterized in that** the pin (13) of disk cam (10) has means (13a) for fixing one end (14a) of spring (14), and that the cover (16) is provided with further means (22) for fixing the other end (14b) of spring (14).

## Revendications

1. Roue (1) avec dispositif de freinage (4 à 18) pour immobiliser de petits véhicules, comme par exemple des landaus, des chaises roulantes, des charrettes à balayures et des caddies, avec une pédale (5) qui les empêche de se mettre à rouler sans que cela soit voulu, ledit dispositif de freinage (4 à 18) ayant un, de préférence deux éléments de freinage (8) pouvant attaquer la roue (1) de façon révocable dans une liaison rigide au moyen d'éléments de commande (10 à 16), la roue (1) étant pourvue, sur son côté faisant face au dispositif de freinage (4 à 18), d'un engrenage (3) destiné à s'engrener dans l'élément de freinage (8),
**caractérisée en ce que** l'engrenage (3) est placé sur le pourtour d'un moyeu (2) de la roue (1), le dispositif de freinage (4 à 18) comprenant un boîtier (4) pourvu d'un renfoncement ayant la forme d'un pot (6) et correspondant au diamètre de l'engrenage (3), de sorte que l'engrenage (3) peut être reçu par le renfoncement en forme de pot (6).

2. Roue selon la revendication 1,
**caractérisée en ce que** le dispositif de freinage (4 à 18) est placé sur l'essieu (9) de la roue.

3. Roue selon la revendication 1,
**caractérisée en ce que** les éléments de freinage (8) du dispositif de freinage sont disposés dans la paroi du renfoncement en forme de pot (6), de sorte que les éléments de freinage (8) peuvent attaquer radialement l'engrenage (3) du moyeu (2).

4. Roue selon la revendication 1,
**caractérisée en ce que** les éléments de commande (10 à 16) comprennent un disque de réglage (10) qui peut être rattaché à l'essieu (9) du véhicule et qui est situé dans le boîtier (4), les éléments de freinage (8) pouvant être engrenés dans ou désengrenés de l'engrenage (3) en faisant pivoter le boîtier (4) par rapport au disque de réglage (10).

5. Roue selon la revendication 4,
**caractérisée en ce que** les éléments de freinage (8) sont chacun guidés dans une rainure de guidage (7) aménagée dans le fond du boîtier, la rainure de guidage (7) partant du centre du boîtier et s'en éloignant.

6. Roue selon la revendication 4,
**caractérisée en ce que** l'élément de freinage (8) possède une dent (8a) destinée à s'engrener dans l'engrenage (3) du moyeu (2).

7. Roue selon la revendication 4,
**caractérisée en ce que** chaque élément de freinage (8) est pourvu d'une arête pilotante, le disque de réglage (10) ayant, sur son côté faisant face aux éléments de freinage (8), deux membres de commande (10a), l'élément de freinage étant accolé aux arêtes pilotantes (10b) des membres de commande (10a).

8. Roue selon la revendication 4,
c**aractérisée en ce que** le disque de réglage (10) est pourvu, sur son côté opposé aux éléments de freinage (8), d'une came de commande (11), ladite came de commande (11) permettant, dans une première position, d'engrener les éléments de freinage (8) dans l'engrenage (3) situé sur le moyeu (2) et, dans une deuxième position, de les désengrener dudit engrenage.

9. Roue selon la revendication 8,
**caractérisée en ce que** la came de commande (11) est fermée.

10. Roue selon la revendication 9,
**caractérisée en ce que** un élément de guidage pour la came de commande (15) est également prévu, ledit élément pouvant être engrené dans la came de commande (11) et pouvant être reçu, de façon à être radialement mobile, par un couvercle (16) qui peut lui-même être relié au boîtier (4).

11. Roue selon la revendication 10,
**caractérisée en ce que** le disque de réglage (10) est avantageusement pourvu, sur son autre côté, d'un tenon (13) parallèle à l'axe du boîtier, le couvercle (16) ayant une fente de guidage (17) en arc de cercle permettant de guider le tenon (13).

12. Roue selon la revendication 11,
**caractérisée en ce que** la longueur de la fente de guidage (17) aménagée tangentiellement sur le couvercle (16) correspond à peu près à l'extension maximale de la came de commande (11).

13. Roue selon la revendication 10,
**caractérisée en ce que** l'élément de guidage de la came de commande (15) a une forme en U, une barre transversale (15c) du U étant pourvue d'un tenon de came (15b) traversant la came de commande (11) et des jambages (15a) étant guidés dans des rainures (20) aménagées dans le couvercle (16) de façon à être radialement mobiles.

14. Roue selon la revendication 10,
**caractérisée en ce que** un deuxième capot de fermeture (18) est prévu pour fermer les ouvertures aménagées dans le couvercle (16).

15. Roue selon la revendication 1,
**caractérisée en ce que** la pédale (5) est fixée au boîtier (4).

16. Roue selon la revendication 2,
**caractérisée en ce que** la pédale (5) peut être pivotée par rapport à l'essieu (9) de la roue à l'encontre d'une force exercée par un ressort.

17. Roue selon la revendication 4,
**caractérisée en ce que** le boîtier (4) est suspendu de façon à pouvoir être pivoté par rapport au disque de réglage (10) à l'encontre de la force exercée par un ressort (14).

18. Roue selon la revendication 11,
**caractérisée en ce que** le tenon (13) du disque de réglage (10) est pourvu de moyens (13a) permettant de fixer l'une des extrémités (14a) du ressort (14), et que le couvercle (16) est pourvu d'autres moyens (22) pour fixer l'autre extrémité (14b) du ressort (14).
